# EUROPEAN PATENT SPECIFICATION

(11) **EP 4 592 118 B1**
(45) Date of publication and mention of the grant of the patent: **09.12.2026**
(21) Application number: 24153990.7
(22) Date of filing: 25.01.2024
(51) Int. Cl.: B60K 6/387, B60K 6/48, B60W 10/02, B60W 10/08, B60W 30/188, B60K 17/28, B60W 50/02

(54) **A POWERTRAIN, A METHOD FOR CONTROLLING A POWERTRAIN, AND A VEHICLE**
ANTRIEBSSTRANG, VERFAHREN ZUR STEUERUNG EINES ANTRIEBSSTRANGS UND FAHRZEUG
GROUPE MOTOPROPULSEUR, PROCÉDÉ DE COMMANDE D'UN GROUPE MOTOPROPULSEUR ET VÉHICULE

(43) Date of publication of application: 30.07.2025
(73) Proprietor: VOLVO TRUCK CORPORATION, 405 08 Göteborg (SE)
(72) Inventor: Karpenman, Fredrik, 421 47 Västra Fröunda (SE)
(74) Representative: Kransell & Wennborg KB

(56) References cited:
- WO-A1-2006/037099
- US-A1- 2009 065 273
- US-A1- 2015 327 426
- US-A1- 20230 151 856
- US-A1- 20230 174 051

## Description

### TECHNICAL FIELD

The invention relates to a powertrain, a method for controlling a powertrain, a control unit, and a vehicle.

The invention can be applied in heavy-duty vehicles, such as trucks, buses, and construction equipment. Although the invention will be described with respect to a truck, the invention is not restricted to this type of vehicle, but may also be used in other vehicles such as buses, trailers, wheel loaders, excavators, etc.

### BACKGROUND

Electrically or partly electrically operated heavy-duty vehicles are becoming increasingly common. For heavy-duty vehicles, it may be desirable to provide a Power Take-Off (PTO) to drive an auxiliary system (PTO device) with an electric motor of the powertrain.

In such powertrains a transmission may be provided, transmitting torque from the electric machine to an output shaft used to propel a driven axle of the vehicle. If there is a second drive unit the output shaft can be common with this second drive unit to drive for example wheels of the vehicle to propel the vehicle.

US20110219900A1 discloses an example of a powertrain unit with electric motor where a transmission is provided with a clutch (K_{PTO}) for engagement/disengagement of a PTO device. The rotational speed of the transmission-side connection point for the auxiliary/PTO device is influenced by means of a transmission brake or an electric motor.

There is an ongoing strive to improve the powertrains of electrically operated vehicles and to secure safer and more efficient functioning of the vehicle.

US 2023/0174051 A1 discloses an example of a powertrain comprising an electromotor, a transmission, a power take-off output, and a clutch configured to engage/disengage the power take-off. US 2009/0065273 A1 discloses control systems and methods for electric drive utility vehicles, and teaches that when a power take-off is disabled, mower deck cutting blades are stopped by pulse width modulation control of deck motors.

### SUMMARY

A primary object of the invention is to provide an, in at least some aspects, improved powertrain for a vehicle including a PTO device. In particular, it is an object to provide such an improved powertrain which uses an electric machine for propulsion of the vehicle and to also drive the PTO device, when the PTO device is engaged.

According to a first aspect of the invention, the above object is achieved by a powertrain for a vehicle according to claim 1. The powertrain comprises:
- a first drive unit adapted to drive a propeller shaft,
- the first drive unit is a first electric machine,
- a power take-off device adapted to be driven by the first electric machine,
- a power take-off clutch adapted to be positioned in engaged or disengaged position to mechanically engage or disengage the power take-off device in relation to the first electric machine,
- a control unit to control rotational speed of the first electric machine and to control the power take-off clutch to one of the engaged or disengaged position,
- a transmission comprising shafts to drivingly connect the first electric machine to drive the power take-off device and the propeller shaft, and where upon an operation demand to disengage the power take-off device, the control unit is adapted to first control the first electric machine to brake rotational speed of the power take-off device to zero, and then the control unit is adapted to control the power take-off clutch to a disengaged position, in order to disengage the power take-off device with zero rotational speed.

In the first aspect of the powertrain the engaged rotating PTO device is first stopped by the first electric machine before executing the disengagement of the PTO device. In this way the PTO device is always ready for re-engagement at any time, since zero PTO rotational speed has been secured already before the disengagement of the PTO. This is of great benefit since the rotational speed of the PTO device otherwise would be unknown, for example, if there is no rotational speed sensor on the PTO device side (auxiliary system side) of the PTO clutch.

By expressions such as "brake rotational speed of the power take-off device to zero", "zero PTO rotational speed" or "zero rotational speed of the power take-off device" or the like throughout the application is meant that the rotational speed of the PTO-device has reached a total rotational stop or close to a rotational stop.

By "mechanically engage or disengage" is meant that a first and a second rotating part in a disengaged state has no mechanical connection between them to transfer torque from the first rotating part to the second rotating part. Example of connection device to achieve such a mechanical connection can be a coupling sleeve on a shaft adapted to be positioned in a first axial position where a gearwheel is engaged to the shaft and a second axial position where the gearwheel is disengaged from the shaft, and thereby can spin freely in relation to the shaft. Thus, the coupling sleeve is moved in axial direction on the shaft to rotationally engage or disengage a gearwheel in relation to the shaft.

Optionally, the power take-off clutch is a dog clutch.

A situation could occur where for example an operator requests disengagement of the PTO device, and shortly after requests reengagement of the PTO device. This could happen if the operator for example unintentionally has requested disengagement, and suddenly realizes the erratic disengagement request. If the PTO device was rotating upon disengagement, there is a risk that the PTO device is still rotating when the reengagement occurs, which with the PTO clutch being a dog clutch could lead to serious wear of the PTO clutch or in worst case even clutch damage. The powertrain according to the first aspect is therefore particularly beneficial if the PTO clutch is of a dog clutch type (claw clutch type).

In another situation for example the control unit is programmed to disengage the PTO device temporary, in order to provide extra torque from the first electric machine to propulsion of the vehicle instead. Such controlling to temporary disengage the PTO device could occur, for example, when vehicle acceleration is requested during a relatively short time. Without the invention this situation could result in difficulty to disengage the PTO clutch if the electric motor still provides torque to the PTO device during disengagement (e g for braking the PTO device), and thereby the torque over the PTO clutch can result in increased disengagement time, or in worst case failure to disengage as long as torque is applied over the PTO clutch and if disengagement device (for example spring-back mechanism or clutch actuator) is not strong enough to be able to disengage. And also here upon reengagement, if the PTO device is still rotating, this could lead to serious wear of the PTO clutch or in worst case even clutch damage. Said problems can be solved with the first aspect of the invention by first stopping the rotation of the PTO device before disengaging the PTO clutch. Another advantage with the first aspect is that when the PTO device is not rotating it is easier (less force needed) to disengage the PTO clutch since there is no torque applied over the PTO clutch.

Optionally the transmission comprises a clutch actuator adapted to be controlled by the control unit and thereby disengage or engage the PTO clutch. The clutch actuator can for example be an electric, pneumatic or hydraulic actuator or other according to known art, and the control unit can control the clutch actuator by providing a control medium (for example electricity, air, fluid) to move the actuator between an engaged and disengaged state according to known art. The actuator is mechanically connected to the PTO clutch in a known way to set the PTO clutch in a disengaged or engaged state.

Optionally the transmission in addition comprises:
- a first input shaft drivingly connected to the first electric machine,
- an output shaft drivingly connected to the propeller shaft,
- a second shaft to which the power take-off device is drivingly connectable or connected via the power take-off clutch,
- gearwheel pair to drivingly connect the second shaft to one of the first input shaft or the output shaft.

The configuration of the transmission can be a solution with or without a countershaft. In fact, the invention can be implemented with many different transmission configurations according to known art.

By "drivingly connected" or "drivingly connect" of two rotating parts is herein intended that torque can be transmitted between the parts, and that the rotational speeds of the parts are proportional.

When two shafts are drivingly connected, torque can be transmitted from one shaft to the other either directly through a clutch or coupling or other rotationally fixing connection, or through for example a gearwheel pair.

When two gearwheels in a gearwheel pair are drivingly connected, torque can be transmitted between the gearwheels. This may be achieved by the gearwheels being in meshing engagement, or by a first gearwheel being in meshing engagement with a second gearwheel, which is in turn in meshing connection with a third gearwheel, or by a first gearwheel being in meshing engagement with a second gearwheel, which is rigidly connected to a third gearwheel, which is in turn in meshing connection with a fourth gearwheel. Thus, in order to be drivingly connected, it is not necessary that two gearwheels are in meshing engagement. It is sufficient that the rotation of one of the gearwheels inevitably leads to the rotation of the other one of the gearwheels.

By a meshing engagement is intended a permanent meshing engagement.

Optionally the transmission also comprises:
- additional gearwheel pairs to drivingly connect the first input shaft to the second shaft, and the second shaft to the output shaft,
- the second shaft is a countershaft.

This embodiment specifically defines a transmission comprising at least one countershaft. A transmission configuration with a countershaft can provide a more compact transmission design with increased possibility for additional gear ratios. As already mentioned, the invention can be implemented with many different transmission configurations known in the art.

Optionally the powertrain comprises a second drive unit adapted to drive the propeller shaft via a second input shaft and gearwheel pair.

The second drive unit can be any type of drive unit according to known art adapted to provide additional propulsion torque for propelling the vehicle. The transmission for the first electric machine and the second drive unit can be adapted to provide torque in parallel or one at a time to the propeller shaft according to known art.

Optionally the second drive unit is one of an electric machine or an internal combustion engine or a gas turbine engine.

According to a second aspect of the invention, at least the primary object is also achieved by a vehicle comprising a powertrain according to the first aspect. The vehicle may for example be a fully electrified vehicle, or a hybrid vehicle comprising at least one drive unit in the form of a combustion engine in addition to one or two power unit(s) in the form of electric machine(s). Advantages and advantageous features of the vehicle according to the invention appear from the above description of the first aspect of the invention.

According to a third aspect of the invention, a method for controlling a powertrain according to the first aspect is provided. The method comprises:
- registering a request to disengage the power take-off device,
- braking rotational speed of the power take-off device,
- registering zero rotational speed of the power take-off device,
- disengaging the power take-off device.

Advantages and advantageous features of the method according to the invention appear from the above description of the first aspect of the invention. Preferably the control unit is registering zero rotational speed of the power take-off device by registering that the first electric machine has reached zero rotational speed.

Optionally, the powertrain can further comprise a rotational speed sensor adapted to measure rotational speed of the power take-off device, where the method comprises:
- if registering a faulty rotational speed signal from the rotational speed sensor,
- then initiating a failsafe mode,
where the failsafe mode comprising:
- if registering a request to disengage the power take-off device,
- first braking rotational speed of the power take-off device, and
- upon registering zero rotational speed of the power take-off device disengaging the power take-off device.

Preferably the control unit is registering zero rotational speed of the power take-off device by registering that the first electric machine has reached zero rotational speed. Thus, the first electric machine can be used to register rotational speed of the PTO device.

If the powertrain comprises a rotational speed sensor adapted to measure rotational speed of the power take-off device, and the rotational speed sensor for some reason, for example malfunction, cannot provide an adequate rotational speed signal, then a failsafe mode is initiated. The failsafe mode comprises the method steps according to the third aspect providing the advantages as mentioned above. Thus, the invention can be implemented with a powertrain comprising a rotational speed sensor adapted to measure rotational speed of the power take-off device.

Optionally the method comprises the step that before the step of braking rotational speed of the power take-off device, first disengaging the first electric machine from the propeller shaft. By disengaging the first electric machine from the propeller shaft before the braking of the first electric machine starts, the propulsion of the vehicle will be less affected.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Figure 1 schematically illustrates a vehicle according to an embodiment of the invention,
Figures 2a to 2c schematically illustrate a powertrain according to different embodiments of the invention,
Figures 3a and 3b are flow charts illustrating methods according to different embodiments of the invention.

The drawings show diagrammatic exemplifying embodiments of the present invention and are thus not necessarily drawn to scale. It shall be understood that the embodiments shown and described are exemplifying and that the invention is not limited to these embodiments. It shall also be noted that some details in the drawings may be exaggerated in order to better describe and illustrate the invention. Like reference characters refer to like elements throughout the description, unless expressed otherwise.

### DETAILED DESCRIPTION OF EXAMPLE EMBODIMENTS OF THE INVENTION

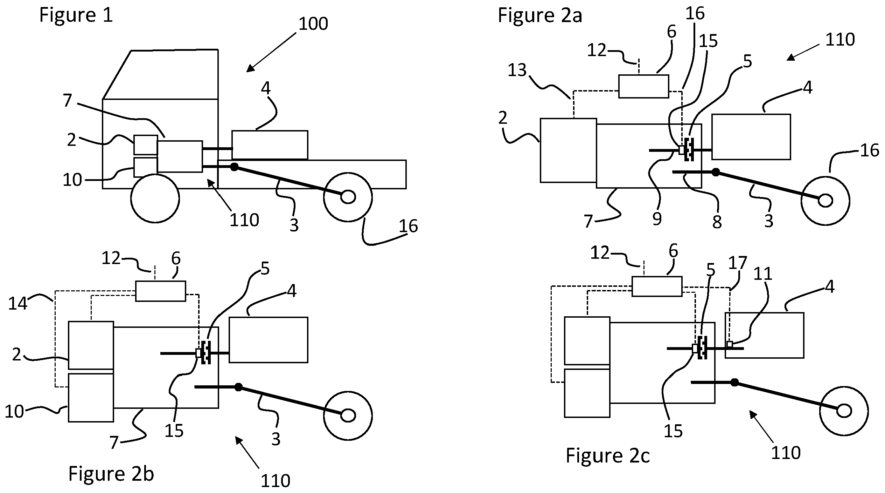

A vehicle 100 in the form of a truck according to an embodiment of the invention is shown in figure 1. The vehicle 100 comprises a powertrain 110 with a first electric machine 2 for propulsion of the vehicle 100. The powertrain 110 further comprises a second drive unit 10 also for propulsion of the vehicle, and that can be one of, for example, an electric machine, an internal combustion engine or a gas turbine engine. Each of the electric machine 2 and the second drive unit 10 is drivingly connected to a propeller shaft 3 through a transmission 7. The transmission 7 is arranged to transfer torque from the electric machine 2 and the second drive unit 10 to the propeller shaft 3, thereby connecting the powertrain 110 to a driven axle that drives driven wheels 16 of the vehicle 100. The transmission 7 can have different configurations of shafts and gearwheels to provide different gears with different gear ratios according to known art.

The vehicle 100 further comprises a power take-off (PTO) device 4 arranged to be driven by at least the first electric machine 2 through the transmission 7. The PTO device 4 can be of different kind known in the art, and can have great moment of inertia, which means that a relatively large amount of torque is needed if there is a need to alter rotational speed of the PTO device 4 rapidly. This also means that it can take relatively long time before the PTO device stops rotating upon disengagement and if not actively braked. The first electric machine 2 and the second drive unit 10 (if it is an electric machine) are configured to be powered by an electric energy storage system (not shown) of the vehicle 100.

The vehicle and the powertrain may have many different configurations. For example, the drive units 2 and 10, and the transmission 7 do not need to be provided at a front of the vehicle as disclosed in figure 1, but may, for example, be combined with a rear axle of the vehicle.

Figure 2a discloses a powertrain 110 of a vehicle 100 according to a first embodiment of the invention, comprising a first electric machine 2 adapted to drive a propeller shaft 3, and when requested to also drive a PTO device 4. Further, a PTO clutch 5 of a dog clutch type is adapted to be positioned in an engaged or disengaged position to mechanically engage or disengage the PTO device 4 in relation to the first electric machine 2. A control unit 6 is adapted to control rotational speed of the first electric machine 2 by communicating signals through electric wire 13 to the first electric machine 2 and upon request from an input signal via electric wire 12. The control unit 6 controls a medium, for example air, hydraulic fluid or electricity (depending of type of actuator) to actuate a clutch actuator 15 through electric wire 16. The clutch actuator 15 is mechanically connected to a part of the PTO clutch movable in axial direction in order to position the PTO clutch 5 in an engaged or disengaged state, and thereby engage or disengage the PTO device 4.

A transmission 7 comprises at least an input shaft (not disclosed) drivingly connected to the first electric machine 2, an output shaft 8 and a second shaft 9 to drivingly connect the first electric machine 2 to drive the PTO device 4 and the propeller shaft 3. The propeller shaft 3 is drivingly connected through the output shaft 8. The different shafts of the transmission 7 can be drivingly connected through gearwheel pairs and in a known way provide different gear ratios when engaged in different combinations. Preferably, the second shaft 9 can be a countershaft. The configuration of the transmission 7 can be realized in many different ways according to known art, and will therefore not be further described in this description. When the PTO device 4 is engaged the control unit 6 can control the rotational speed of the PTO device 4 by controlling the rotational speed of the first electric machine 2.

Thus, the first electric machine 2 can drive the PTO device 4 with a requested rotational speed. Upon an operation demand through electric wire 12 to disengage the PTO device, the control unit 6 is adapted to first control the first electric machine 2 to brake the rotational speed of the PTO device 4 to zero, and then the control unit 6 is adapted to control the PTO clutch 5 to a disengaged position, in order to disengage the PTO device 4 with zero rotational speed. Before the step of braking the rotational speed of the PTO device 4 starts, preferably the first electric machine 2 is first disengaged from the propeller shaft 3. The rotational speed of the PTO device 4 is registered by the control unit 6 registering a signal through wire 13 that the first electric machine 2 has reached zero rotational speed.

Figure 2b discloses a powertrain 110 of a vehicle 100 according to a second embodiment of the invention. This embodiment is similar to the first embodiment according to figure 2a, but differs in that it is in addition provided with a second drive unit 10, also adapted to drive the propeller shaft 3, but instead via a second input shaft (not disclosed) and additional gearwheel pair or pairs. The second drive unit 10 is in the disclosed example controlled by the control unit 6 via electric wire 14. Preferably the second drive unit 10 is a second electric machine, but can also be an internal combustion engine or a gas turbine engine, or other propulsion unit type known in the art.

Figure 2c discloses a powertrain 110 of a vehicle 100 according to a third embodiment of the invention. This embodiment is similar to the second embodiment according to figure 2b, but differs in that it is in addition provided with a rotational speed sensor 11 adapted to measure rotational speed of the PTO device 4 on the PTO device side of the PTO clutch 5. A rotational speed value of the PTO device 4 is communicated from the rotational speed sensor 11 to the control unit 6 through electric wire 17. In this embodiment the control unit 6 is adapted to register a faulty signal indicating a faulty rotational speed sensor 11. A faulty signal can include, for example, that there is no signal communicated from the rotational speed sensor, or the signal from the rotational speed sensor 11 is registered to be corrupt or obviously wrong, et cetera. If the control unit 6 registers a faulty signal then the control unit is adapted to initiate a failsafe mode. The failsafe mode comprises the steps that if the control unit 6 registers a request to disengage the PTO device 4, the control unit 6 first brakes rotational speed of the PTO device 4, and then when the control unit registers zero rotational speed of the PTO device 4 the control unit 6 is adapted to disengage the PTO device 4. The rotational speed of the PTO device 4 is registered by the control unit 6 registering a signal through wire 13 that the first electric machine 2 has reached zero rotational speed.

In all the exemplified embodiments of the invention the different shafts in the transmission are mounted to a transmission housing of the transmission 7 preferably using bearings (not disclosed).

Preferably, the transmission 7 is an Automated Mechanical Transmission (AMT).

The electrical wires 12, 13, 14, 16, 17 in figures 2a to 2c indicated as dotted lines can alternatively be communication device using known transmission buses such a CAN-bus and/or wireless communication devices.

In all the exemplified embodiments of the invention when the control unit 6 controls the first electric machine 2 to brake the PTO device 4, the braking energy may be converted into electric energy by the electric machine 2, which for example may be utilized for charging the electric energy storage system (not disclosed).

Features from the different embodiments may of course be combined so that, for example, the embodiment of figure 2a comprising only one electric machine 2 can be equipped with a rotational speed sensor 15 from the embodiment in figure 2c, including the method steps with the failsafe mode of the embodiment of figure 2c.

For all the disclosed embodiments of the invention during the reengagement of the PTO device 4 the electric machine 2 can be controlled to rotate slowly, in order to avoid a tooth-to-tooth situation in the PTO clutch 5 of dog clutch type. In this way a smoother and safer reengagement can be achieved. A tooth-to-tooth situation is not desirable since the dog clutch can be stuck in a disengaged state, at least temporarily.

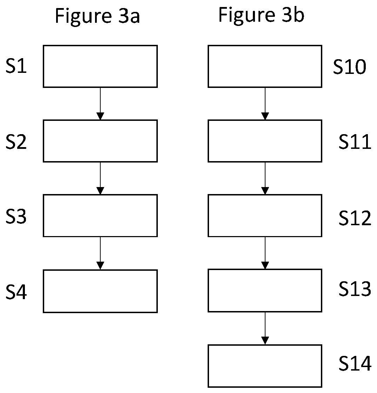

A method for controlling the powertrain 110 according to an embodiment of the invention is illustrated in figure 3a. The method comprises the following steps:
S1: Registering a request to disengage the PTO device 4,
S2: braking rotational speed of the PTO device 4,
S3: registering zero rotational speed of the PTO device 4,
S4: disengaging the PTO device 4.

A further method for controlling the powertrain 110 according to the embodiment of figure 2c with the rotational speed sensor is illustrated in figure 3b. Here, the method comprises the following steps:
S10: If registering a faulty rotational speed signal from the rotational speed sensor 11,
S11: then initiating a failsafe mode,
where the failsafe mode comprises the steps:
S12: if registering a request to disengage the PTO device 4,
S13: first braking rotational speed of the PTO device 4, and
S14: upon registering zero rotational speed of the PTO device 4 disengaging the power take-off device 4.

In step S14 the control unit 6 registers zero rotational speed of the PTO device 4 by registering a signal through wire 13 that the first electric machine 2 has reached zero rotational speed.

The control unit 6 may be an electronic device configured to perform the methods illustrated in figures 3a or 3b. It may for this purpose comprise means for controlling the first electric machine 2, means for controlling the second drive unit 10 (if there is any), and means for controlling the transmission 7, including at least the gear engaging devices (such as actuators for coupling sleeves, not shown), and the clutch actuator 15 of the PTO clutch 5. The control unit 6 may be configured to control the powertrain 110 and the PTO clutch 5 in dependence of a request to disengage the PTO device 4.

The control unit 6 may include a microprocessor, a microcontroller, a programmable digital signal processor or another programmable device. Thus, the control unit 6 comprises electronic circuits and connections (not shown) as well as processing circuitry (not shown) such that the control unit 6 can communicate with different parts of the vehicle 100 or with different control units of the vehicle 100, such as with various sensors, systems and control units, in particular with one or more electronic control units (ECUs) controlling electrical systems or subsystems in the vehicle 100, such as an energy storage system control unit of an electric energy storage system (not shown) of the vehicle 100.

The control unit 6 may comprise modules in either hardware or software, or partially in hardware or software, and communicate using known transmission buses such a CAN-bus and/or wireless communication capabilities. The processing circuitry may be a general-purpose processor or a specific processor. The control unit 6 may comprise a non-transitory memory for storing computer program code and data. Thus, the skilled person realizes that the control unit 6 may be embodied through many different constructions.

Although herein illustrated as a single control unit, the control unit 6 may be formed of several different control units configured to communicate with each other, such as separate control units for controlling at least the first electric machine 2 and for controlling the transmission 7. Thus, the software for performing the control of at least the first electric machine 2 and for controlling the transmission 7 can be spread among several control units.

It is to be understood that the present invention is not limited to the embodiments described above and illustrated in the drawings; rather, the skilled person will recognize that many changes and modifications may be made within the scope of the appended claims.

## Claims

1. A powertrain (110) for a vehicle (100), comprising:
- a first drive unit adapted to drive a propeller shaft (3),
- the first drive unit is a first electric machine (2),
- a power take-off device (4) adapted to be driven by the first electric machine,
- a power take-off clutch (5) adapted to be positioned in engaged or disengaged position to mechanically engage or disengage the power take-off device in relation to the first electric machine,
- a control unit (6) to control rotational speed of the first electric machine and to control the power take-off clutch to one of the engaged or disengaged position,
- a transmission (7) comprising shafts (8, 9) to drivingly connect the first electric machine to drive the power take-off device and the propeller shaft, **characterized in that**
where upon an operation demand to disengage the power take-off device, the control unit is adapted to first control the first electric machine to brake rotational speed of the power take-off device to zero, and then the control unit is adapted to control the power take-off clutch to a disengaged position, in order to disengage the power take-off device with zero rotational speed.

2. The powertrain according to claim 1, wherein the power take-off clutch (5) is a dog clutch.

3. The powertrain according to one of the preceding claims, wherein the transmission comprising a clutch actuator (15) adapted to be controlled by the control unit (6) and thereby disengage or engage the PTO clutch (5).

4. The powertrain according to one of the preceding claims, wherein the transmission comprising:
- a first input shaft drivingly connected to the first electric machine,
- an output shaft (8) drivingly connected to the propeller shaft (3),
- a second shaft (9) to which the power take-off device is drivingly connectable or connected via the power take-off clutch,
- gearwheel pair to drivingly connect the second shaft to one of the first input shaft or the output shaft.

5. The powertrain according to the preceding claim, wherein the transmission further comprising:
- additional gearwheel pairs to drivingly connect the first input shaft to the second shaft, and the second shaft to the output shaft,
- the second shaft (9) is a countershaft.

6. The powertrain according to one of the preceding claims, wherein a second drive unit (10) is adapted to drive the propeller shaft (3) via a second input shaft and gearwheel pair.

7. The powertrain according to the preceding claim, wherein the second drive unit (10) is one of an electric machine or an internal combustion engine or a gas turbine engine.

8. A vehicle (100) comprising a powertrain (110) according to any one of the preceding claims.

9. A method for controlling a powertrain (110) according to any of claims 1-7, the method comprising:
- registering a request to disengage the power take-off device (4),
- braking rotational speed of the power take-off device,
- registering zero rotational speed of the power take-off device,
- disengaging the power take-off device.

10. The method according to claim 9, the powertrain further comprising a rotational speed sensor (11) adapted to measure rotational speed of the power take-off device (4), the method comprising:
- if registering a faulty rotational speed signal from the rotational speed sensor,
- then initiating a failsafe mode,
where the failsafe mode comprising:
- if registering a request to disengage the power take-off device (4),
- first braking rotational speed of the power take-off device (4), and
- upon registering zero rotational speed of the power take-off device (4) disengaging the power take-off device (4).

11. The method according to one of the claims 9 and 10, comprising the control unit (6) registering zero rotational speed of the power take-off device (4) by registering that the first electric machine (2) has reached zero rotational speed.

12. The method according to one of the claims 9 and 11, where before the step of braking rotational speed of the power take-off device (4), first disengaging the first electric machine (2) from the propeller shaft (3).

## Patentansprüche

1. Antriebsstrang (110) für ein Fahrzeug (100), der Folgendes umfasst:
- eine erste Antriebseinheit, die dazu ausgelegt ist, eine Kardanwelle (3) anzutreiben,
- wobei die erste Antriebseinheit eine erste elektrische Maschine (2) ist,
- eine Nebenabtriebsvorrichtung (4), die dazu ausgelegt ist, von der ersten elektrischen Maschine angetrieben zu werden,
- eine Nebenabtriebskupplung (5), die dazu ausgelegt ist, in eine eingerückte oder ausgerückte Position positioniert zu werden, um im Verhältnis zur ersten elektrischen Maschine die Nebenabtriebsvorrichtung mechanisch einzurücken oder auszurücken,
- eine Steuereinheit (6) zum Steuern der Drehzahl der ersten elektrischen Maschine und zum Steuern der Nebenabtriebskupplung in die eingerückte oder die ausgerückte Position,
- ein Getriebe (7), das Wellen (8, 9) umfasst, um die erste elektrische Maschine antriebsmäßig zu verbinden, um die Nebenabtriebsvorrichtung und die Kardanwelle zu steuern,
**dadurch gekennzeichnet, dass**
bei einer Betriebsanforderung zum Ausrücken der Nebenabtriebsvorrichtung die Steuereinheit dazu ausgelegt ist, zuerst die erste elektrische Maschine zu steuern, um die Drehzahl der Nebenabtriebsvorrichtung auf null abzubremsen, und dann die Steuereinheit dazu ausgelegt ist, die Nebenabtriebskupplung in eine ausgerückte Position zu steuern, um die Nebenabtriebsvorrichtung bei einer Drehzahl von Null auszurücken.

2. Antriebsstrang nach Anspruch 1, wobei die Nebenabtriebskupplung (5) eine Klauenkupplung ist.

3. Antriebsstrang nach einem der vorhergehenden Ansprüche, wobei das Getriebe ein Kupplungsstellglied (15) umfasst, das dazu ausgelegt ist, von der Steuereinheit (6) gesteuert zu werden und dadurch die Nebenabtriebskupplung (5) auszurücken oder einzurücken.

4. Antriebsstrang nach einem der vorhergehenden Ansprüche, wobei das Getriebe Folgendes umfasst:
- eine erste Eingangswelle, die antriebsmäßig mit der ersten elektrischen Maschine verbunden ist,
- eine Ausgangswelle (8), die antriebsmäßig mit der Kardanwelle (3) verbunden ist,
- eine zweite Welle (9), mit der die Nebenabtriebsvorrichtung über die Nebenabtriebskupplung antriebsmäßig verbindbar oder verbunden ist,
- ein Zahnradpaar zum antriebsmäßigen Verbinden der zweiten Welle mit der ersten Eingangswelle oder der Ausgangswelle.

5. Antriebsstrang nach dem vorhergehenden Anspruch, wobei das Getriebe ferner Folgendes umfasst:
- zusätzliche Zahnradpaare zum antriebsmäßigen Verbinden der ersten Eingangswelle mit der zweiten Welle sowie der zweiten Welle mit der Ausgangswelle,
- wobei die zweite Welle (9) eine Gegenwelle ist.

6. Antriebsstrang nach einem der vorhergehenden Ansprüche, wobei eine zweite Antriebseinheit (10) dazu ausgelegt ist, die Kardanwelle (3) über eine zweite Eingangswelle und ein Zahnradpaar anzutreiben.

7. Antriebsstrang nach dem vorhergehenden Anspruch, wobei die zweite Antriebseinheit (10) eine elektrische Maschine oder ein Verbrennungsmotor oder eine Gasturbine ist.

8. Fahrzeug (100), das einen Antriebsstrang (110) nach einem der vorhergehenden Ansprüche umfasst.

9. Verfahren zum Steuern eines Antriebsstrangs (110) nach einem der Ansprüche 1-7, wobei das Verfahren Folgendes umfasst:
- Erfassen einer Aufforderung zum Ausrücken der Nebenabtriebsvorrichtung (4),
- Abbremsen der Drehzahl der Nebenabtriebsvorrichtung,
- Erfassen einer Drehzahl von Null der Nebenabtriebsvorrichtung,
- Ausrücken der Nebenabtriebsvorrichtung.

10. Verfahren nach Anspruch 9, wobei der Antriebsstrang ferner einen Drehzahlsensor (11) umfasst, der dazu ausgelegt ist, die Drehzahl der Nebenabtriebsvorrichtung (4) zu messen, wobei das Verfahren Folgendes umfasst:
- beim Erfassen eines fehlerhaften Drehzahlsignals vom Drehzahlsensor,
- dann Einleiten eines abgesicherten Modus,
wobei der abgesicherte Modus Folgendes umfasst:
- beim Erfassen einer Aufforderung zum Ausrücken der Nebenabtriebsvorrichtung (4),
- zuerst Abbremsen der Drehzahl der Nebenabtriebsvorrichtung (4), und
- beim Erfassen einer Drehzahl von Null der Nebenabtriebsvorrichtung (4) Ausrücken der Nebenabtriebsvorrichtung (4).

11. Verfahren nach einem der Ansprüche 9 und 10, das die Steuereinheit (6) umfasst, die eine Drehzahl von Null der Nebenabtriebsvorrichtung (4) erfasst, indem sie erfasst, dass die erste elektrische Maschine (2) eine Drehzahl von Null erreicht hat.

12. Verfahren nach einem der Ansprüche 9 und 11, wobei vor dem Schritt des Abbremsens der Drehzahl der Nebenabtriebsvorrichtung (4) zuerst das Ausrücken der ersten elektrischen Maschine (2) von der Kardanwelle (3) erfolgt.

## Revendications

1. Groupe motopropulseur (110) pour véhicule (100), comprenant :
- une première unité motrice adaptée pour entraîner un arbre de transmission (3),
- la première unité motrice étant une première machine électrique (2),
- un dispositif de prise de force (4) adapté pour être entraîné par la première machine électrique,
- un embrayage de prise de force (5) adapté pour être positionné en position embrayée ou débrayée pour engager ou désengager mécaniquement le dispositif de prise de force par rapport à la première machine électrique,
- une unité de commande (6) pour commander la vitesse de rotation de la première machine électrique et pour commander l'embrayage de la prise de force dans l'une des positions embrayée ou débrayée,
- une transmission (7) comprenant des arbres (8, 9) pour relier en entraînement la première machine électrique afin d'entraîner le dispositif de prise de force et l'arbre de transmission,
**caractérisé en ce que**
lorsqu'une demande de désengagement du dispositif de prise de force est faite, l'unité de commande est adaptée pour commander d'abord la première machine électrique pour freiner la vitesse de rotation du dispositif de prise de force à zéro, puis l'unité de commande est conçue pour passer l'embrayage de prise de force dans une position désengagée afin de désengager le dispositif de prise de force avec une vitesse de rotation nulle.

2. Groupe motopropulseur selon la revendication 1, dans lequel l'embrayage de prise de force (5) est un embrayage à crabots.

3. Groupe motopropulseur selon l'une des revendications précédentes, dans lequel la transmission comprend un actionneur d'embrayage (15) adapté pour être commandé par l'unité de commande (6) et ainsi désengager ou engager l'embrayage de prise de force (5).

4. Groupe motopropulseur selon l'une des revendications précédentes, dans lequel la transmission comprend :
- un premier arbre d'entrée relié en entraînement à la première machine électrique,
- un arbre de sortie (8) relié en entraînement à l'arbre de transmission (3),
- un second arbre (9) auquel le dispositif de prise de force peut être relié de manière motrice ou relié par l'intermédiaire de l'embrayage de prise de force,
- une paire de pignons pour connecter en entraînement le second arbre à l'un parmi le premier arbre d'entrée et l'arbre de sortie.

5. Groupe motopropulseur selon la revendication précédente, dans lequel la transmission comprend en outre :
- des paires de pignons supplémentaires pour connecter en entraînement le premier arbre d'entrée au second arbre, et le second arbre à l'arbre de sortie,
- le second arbre (9) étant un contre-arbre.

6. Groupe motopropulseur selon l'une des revendications précédentes, dans lequel une seconde unité motrice (10) est adaptée pour entraîner l'arbre de transmission (3) via une seconde paire d'arbre d'entrée et pignon.

7. Groupe motopropulseur selon la revendication précédente, dans lequel la seconde unité motrice (10) est l'une d'une machine électrique ou d'un moteur à combustion interne ou d'un moteur à turbine à gaz.

8. Véhicule (100) comprenant un groupe motopropulseur (110) selon l'une quelconque des revendications précédentes.

9. Procédé de commande d'un groupe motopropulseur (110) selon l'une quelconque des revendications 1 à 7, le procédé comprenant :
- l'enregistrement d'une demande de désengagement du dispositif de prise de force (4),
- le freinage de la vitesse de rotation du dispositif de prise de force,
- l'enregistrement de la vitesse de rotation nulle du dispositif de prise de force,
- le désengagement du dispositif de prise de force.

10. Procédé selon la revendication 9, le groupe motopropulseur comprenant en outre un capteur de vitesse de rotation (11) adapté pour mesurer la vitesse de rotation du dispositif de prise de force (4), le procédé comprenant :
- en cas d'enregistrement d'un signal de vitesse de rotation défectueux du capteur de vitesse de rotation,
- l'initiation d'un mode de sécurité intégrée, le mode de sécurité intégrée comprenant :
- en cas d'enregistrement d'une demande de désengagement du dispositif de prise de force (4),
- d'abord le freinage de la vitesse de rotation du dispositif de prise de force (4) et
- lors de l'enregistrement de la vitesse de rotation nulle du dispositif de prise de force (4), le désengagement du dispositif de prise de force (4).

11. Procédé selon l'une des revendications 9 et 10, dans lequel l'unité de commande (6) enregistre une vitesse de rotation nulle du dispositif de prise de force (4) en enregistrant que la première machine électrique (2) a atteint une vitesse de rotation nulle.

12. Procédé selon l'une des revendications 9 et 11, dans lequel, avant l'étape de freinage de la vitesse de rotation du dispositif de prise de force (4), on désengage d'abord la première machine électrique (2) de l'arbre de transmission (3).
